# EUROPEAN PATENT APPLICATION

(11) **EP 2 014 741 A1**
(43) Date of publication of application: **14.01.2009**
(21) Application number: 07112265.9
(22) Date of filing: 11.07.2007
(51) Int. Cl.: C10B 27/06, F16K 1/36

(54) **Coke oven offtake piping system**

(71) Applicant: PAUL WURTH S.A., 1122 Luxembourg (LU)
(72) Inventor: Lonardi, Emile, 4945 Bascharage (LU); Hansmann, Thomas, 54296 Trier (DE); Pivot, Stefano, 16156 Genova (IT); Bisogno, Maurizio, 16136 Genova (IT)
(74) Representative: Ocvirk, Philippe

(57) **Abstract**

A coke oven piping system (10) comprises a pipe assembly for conveying coke oven gases (14) from a coke oven to a collecting main (16); and flow control means comprising a flow orifice (22) in the pipe assembly with an associated obturating member (20), the obturating member being axially moveable between an open position at a certain distance from the flow orifice to a closed position in which it substantially obstructs the flow orifice (22). At least one throttling opening (28) is arranged so as to offer, towards the end of the closing stroke of the obturating member (20), an opening area for the gases to the collecting main (16) that depends on the axial position of the obturating member (20).

## Description

### TECHNICAL FIELD

The present invention generally relates to coke oven construction and more specifically to an offtake piping of a coke oven with integrated flow control valve to adjust the raw gas flow from each individual oven chamber to the collecting main.

### BACKGROUND ART

Conventionally in coke plants comprising a battery of coke ovens the raw gases (distillation gases and vapors) from each single oven are lead through an offtake piping to a collecting main extending typically over the entire length of the battery of coke ovens. The offtake piping itself typically comprises a standpipe (also known as riser or ascension pipe) extending upwardly from the oven roof and a gooseneck, i.e. a short curved pipe communicating with the top of the standpipe and leading to the collecting main. One or more spraying nozzles are arranged in the gooseneck to cool (quench) the raw gases from about 700-800°C down to a temperature of about 80-100°C.

In order to individually control the gas pressure in each coke oven chamber, it is known to provide a throttling valve in the offtake piping or at its discharge opening in the collecting main, that allows to close and/or throttle the gas flow through the offtake piping. Such devices offer the possibility of continuously controlling the oven pressure during distillation time so as to avoid overpressure during the first phase of the distillation process, by maintaining a negative pressure in the collecting main, whereby emissions from doors, charging holes etc. can be fully reduced. Moreover, a continuous oven pressure control allows avoiding negative relative pressures at the oven bottom during the last phase of distillation when the coke gas flow rate is low.

A known type of pressure control valve is e.g. described in US 7,709,743. This valve is arranged inside the collecting main at the discharge extremity of a vertical discharge section of the gooseneck. The valve permits controlling the backpressure in the oven chamber and is based on the adjustment of water level inside the valve, providing a variation of the valve port area through which the raw gas flows.

EP 1 746 142, which relates to a method of reducing the polluting emissions from coke ovens, uses a pot valve pivotable about a lateral axis. Each distillation chamber is connected by a gooseneck to a collecting main via such interposed pot valve. The oven pressure in the individual distillation chambers is detected by means of pressure sensors and the pot valve position is adjusted in order to control the flow rate to the collecting main depending on the pressure in the oven. In one embodiment, the valve member is provided with a curved tubular metal structure to limit the flow cross section during the beginning of the opening stroke. Despite the reliable design of this valve, it does not allow much progressivity in the flow rate control.

### OBJECT OF THE INVENTION

The object of the present invention is to provide an alternative coke oven offtake piping system with improved, integrated flow control capability. This object is achieved by a coke oven offtake piping system as claimed in claim 1.

### GENERAL DESCRIPTION OF THE INVENTION

A coke oven offtake piping system in accordance with the present invention comprises a pipe assembly for conveying coke oven gases from a coke oven to a collecting main. It is provided with flow control means including a flow orifice in the pipe assembly with an associated obturating member, the obturating member being axially moveable between an open position at a certain distance (i.e. axially spaced) from the flow orifice to a closed position in which it obstructs the flow through the flow orifice.

It shall be appreciated that at least one throttling opening, preferably a set of throttling openings, is/are arranged to be active towards the end of the closing stroke of the obturating member, the at least one throttling opening offering an opening area for the gases to the collecting main that depends on the axial position of the obturating member. These throttling openings, which may typically offer a cumulative opening area lower than that of the flow orifice (in open position) allow a fine control (throttling) of the gas flow rate to the collecting main and thus of pressure in the coke oven.

The control of the flow rate towards the end of the distillation phase in the oven indeed requires some fine adjustment capability since the amounts of gases are much lower than at the beginning of the process (where the flow control valve is fully open). In the present system, the flow control means are advantageously designed so that towards the end of the closing stroke, the gas flows through the throttling openings only and their opening area is controlled by adjusting the axial position of the obturating member.

The one or more throttling opening(s) may be provided in the obturating member. The obturating member may have a general shape of a pot, dome or bell, i.e. it may be generally designed as a hollow body with lateral walls and closed at one end. The obturating member may be arranged so that the pot/dome/bell opening is directed upwards or downwards.

In one embodiment, the obturating member has a general pot, dome or bell shape and the set of throttling openings is formed by a plurality of cut-outs extending from the pot edge towards the pot bottom. In another embodiment, the obturating member has a general, inversed pot shape with the set of throttling openings therein.

The one or more throttling openings may alternatively be fixedly arranged in the vicinity of the flow opening, e.g. in a throttling sleeve extending axially from the flow orifice.

In one embodiment, the flow control means comprise a throttling sleeve surrounding the flow orifice; and the obturating member has a general pot, bell or cap shape that is designed so that as to move, towards the end of the closing stroke of the obturating member, along the outer surface of said sleeve member to progressively obstruct the throttling openings.

In another embodiment, a two-part obturating member is associated with a throttling sleeve. The obturating member comprises: an axially moveable upper part adapted to adjust the opening area of the throttling openings in the throttling sleeve and/or close the flow orifice, and a lower part, axially moveable with respect to the upper part and/or in conjunction therewith and formed as a conical segment, whereby the lower part can be positioned with respect to the flow orifice to restrict the flow therethrough.

In a further embodiment, the obturating member comprises a generally pot, bell or dome shaped upper part and a lower part with one or more throttling openings therein, the lower part being axially moveable relative to the upper part. The upper and lower parts cooperate with respective seats around the flow orifice. The upper part is designed so that it can act as a cover that may be moved along the throttling openings after the lower part has been positioned on its seat. Thereby, the only passage for the gas to the collecting main is through the throttling openings, the area of which can be adjusted by modifying the axial position of the upper part.

Operation of the obturating member may be carried out by means of any appropriate manually and/or automatically operable drive means.

In the above embodiments, a hydraulic seal may typically form when the obturating member is in closed position, due to accumulation of process fluid on the upper surface of obturating member and surrounding piping portion bearing the flow orifice. However, for increased safety, a conventional pot valve may be arranged further downstream of the flow orifice.

The present invention also concerns a coke plant comprising a battery of coke ovens and a collecting main, wherein the gases from each single oven are lead to said collecting main via a coke oven offtake piping system as defined above.

### BRIEF DESCRIPTION OF THE DRAWINGS

The present invention will be more apparent from the following description of several not limiting embodiments with reference to the attached drawings, wherein:
FIG. 1: is a vertical section view through a first embodiment of a coke oven offtake piping system in accordance with the present invention, the obturating member being in an open position and comprising a set of throttling openings;
FIG. 2: is a vertical section view of the embodiment of Fig.1 with the obturating member in a throttling position;
FIG. 3: is a vertical section view through a second embodiment of a coke oven offtake piping system in accordance with the present invention, the obturating member being in an open position;
FIG. 4: is a vertical section view of the embodiment of Fig.3 with the obturating member in a throttling position;
FIG. 5: is a vertical section view of the embodiment of Fig.3 with the obturating member in closed position;
FIG. 6: is a vertical section view through a third embodiment of a coke oven offtake piping system in accordance with the present invention, the obturating member being in an open position;
FIG. 7: is a vertical section view of the embodiment of Fig.6 with the obturating member in a medium flow control position;
FIG. 8: is a vertical section view of the embodiment of Fig.6 with the operating member in a throttling position;
FIG. 9: is a vertical section view of the embodiment of Fig.6 with the operating member in closed position;
FIG. 10: is a vertical section view through a fourth embodiment of a coke oven offtake piping system in accordance with the present invention, the obturating member being in an open position;
FIG. 11: is a vertical section view of the embodiment of Fig.10 with the obturating member in a throttling position;
FIG. 12: is a vertical section view through a fifth embodiment of a coke oven offtake piping system in accordance with the present invention, the obturating member being in an open position;
FIG. 13: is a vertical section view of the embodiment of Fig.12 with the obturating member in a throttling position;
FIG. 14: is a vertical section view of the embodiment of Fig.12 with the operating member in closed position.

### DETAILED DESCRIPTION OF PREFERRED EMBODIMENTS

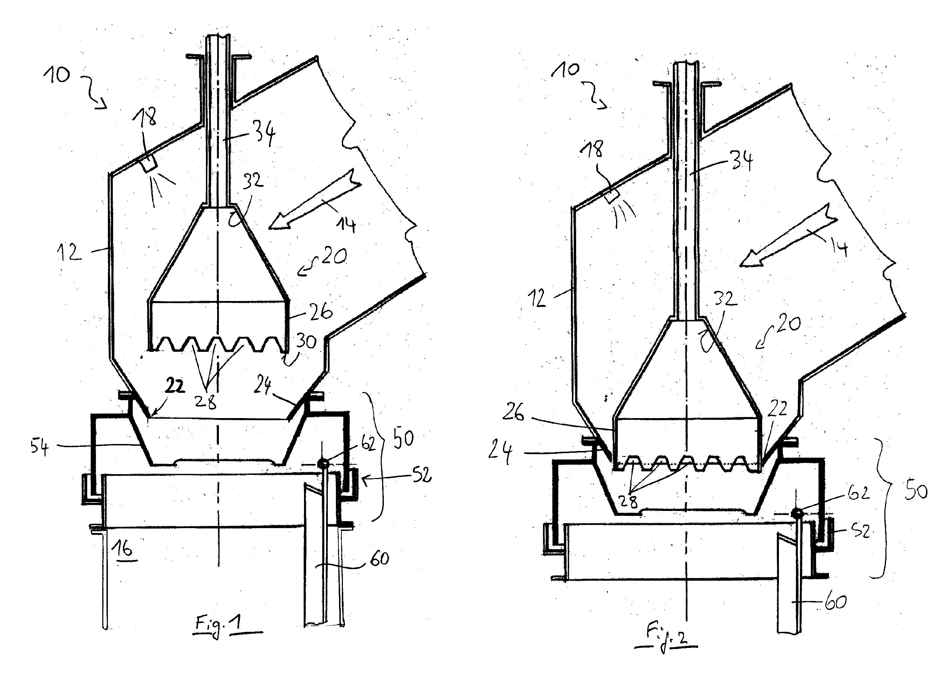

Fig.1 shows a first embodiment of a coke oven offtake piping system 10 in accordance with the present invention. It consists of a piping assembly for conveying raw distillation gases from an individual coke oven chamber to a collecting main. In the present embodiment, the piping assembly comprises a standpipe (not shown) connected at its bottom to the roof of a coke oven (not shown), e.g. a slot-type chamber of a coke oven battery. Reference sign 12 indicates a gooseneck (curved pipe) for conveying the raw coke oven gases (arrow 14) from the upper part of the standpipe to the collecting main 16 of the coke plant, which typically extends over the entire length of the battery of coke ovens. These piping elements may be conventionally provided with a refractory lining. Gases exiting the oven chamber at a temperature of about 700 to 800°C are advantageously quenched in the gooseneck 12 by means of one (or more) spraying nozzle 18 (spraying process fluid such as ammonia water or the like) down to a temperature of 80-100°C.

Flow control means are provided in the offtake piping 10 to control the flow rate of gases to the collecting main 16 and the pressure in the respective coke oven. The present flow control means include an obturating member 20 that cooperates with a flow orifice 22 in the offtake piping, preferably downstream of the gooseneck 12. The flow orifice 22 is defined by the extremity of an inner pipe portion 24, here e.g. a cone segment, that is arranged so that the entire flow of quenched gas exiting the gooseneck portion 12 must flow to the collecting main 16 through orifice 22.

In the present embodiment, the obturating member 20 is designed has a general bell-shape (conically tapering upper portion and cylindrical bottom), the cylindrical wall 26 of which is provided with a number of cut-outs 28 extending from the bell's edge 30 to its closed end 32. These cut-outs 28 form a set of throttling openings, as will be explained below. The obturating member 20 is fixed by its closed end 32 to a shaft 34 permitting its axial actuation in the pipe assembly 10. Actuation of the drive shaft 34, and thus of the obturating member 20, can be performed by means of any appropriate drive mechanism capable of transmitting an axial actuating force to shaft 34 for moving the latter upwards and downwards.

It may be noted that in the present embodiment, the obturating member 20 is dimensioned so that its outer shape tightly fits through the flow orifice 22, so that it can be moved therein while substantially obturating it.

In Fig.1 the obturating member 20 is in an open position, spaced (at a certain distance) from the flow orifice 22. Obturating member 20 is typically set in such opening position at the beginning of the distillation process in the coke oven, since high amounts of gases are to be drawn off to the collecting main 16. As the distillation process goes on, the obturating member is typically moved downward in direction of the opening orifice 22, which will reduce the gap between the obturating member 20 and the orifice 22, providing some flow control capability at medium flow rates.

As it will be understood from Figs.1 and 2, as soon as the edge 30 of the obturating member 20 arrives at the height of the flow orifice 22, the only flow passage for the quenched gas to the collecting main 16 is that offered by the throttling openings 28. Moving the obturating member downward, the opening area exposed by the throttling openings 28 to the gas progressively decreases (in Fig.2 the obturating member 20 is in a medium throttling position), until the inward extremity of the openings 28 pass below the plane of the flow orifice 22 whereby the flow through orifice 22 is finally completely obstructed by the obturating member 20.

Whereas a bell shape (or inversed funnel shape) is here preferred for its tapering upper part that is aerodynamically favourable, a variety of shapes can be used for the obturating member, e.g. an inversed pot or cup shape or a dome shape. The idea is that the obturating member has an axially extending cylindrical portion (in which the throttling openings are arranged) that tightly fits through the flow orifice 22, and this cylindrical section must be close at one end, preferably the upper end.

It remains to be noted that inner pipe portion 24 opens, by its flow orifice 22, in a connecting section 50 that connects the exit of the gooseneck 12 to the collection main 16 via an expansion joint 52, as is known in the art. In order to provide a sealed closure, the connecting section 50 may comprise a truncated conical pipe 54 that may be closed by a conventional pot valve 60, as is known in the art. In Figs.1 and 2 pot valve 60 is in its open position, but it can be rotated about axis 62 in a horizontal position, closing the extremity of pipe 54 and allowing accumulation of process fluid to form a hydraulic seal.

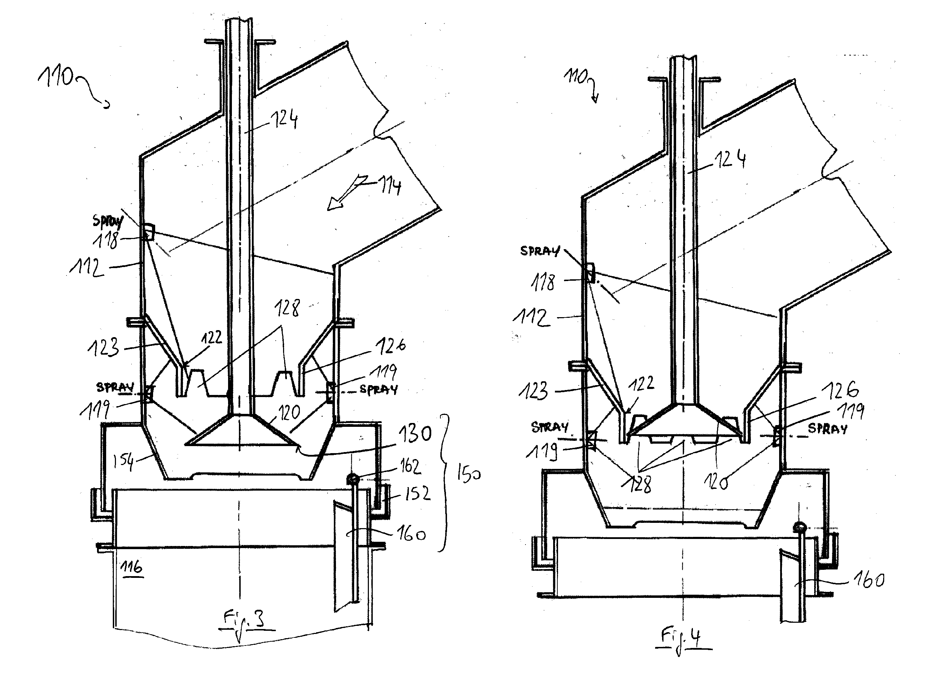

Figs.3 to 5 show another embodiment of a system 110 in accordance with the present invention. Reference sign 112 indicates a gooseneck (curved pipe) for conveying the raw coke oven gases (arrow 114) from the upper part of the standpipe to the collecting main 116 of the coke plant. Quenching of the gases is preferably carried out by means of spraying nozzle 118.

The flow control means include a flow orifice 122 defined by a tubular section 123 downstream of the gooseneck 112 and an associated obturating member 120 that is axially moveable by means of a shaft 124. In this embodiment the throttling openings are formed by a set of cut-outs 128 in a sleeve 126 that is attached to the tubular section 123 and extends axially downwardly from the flow orifice 122. Contrary to the embodiment of Fig.1, the closing stroke is ascendant.

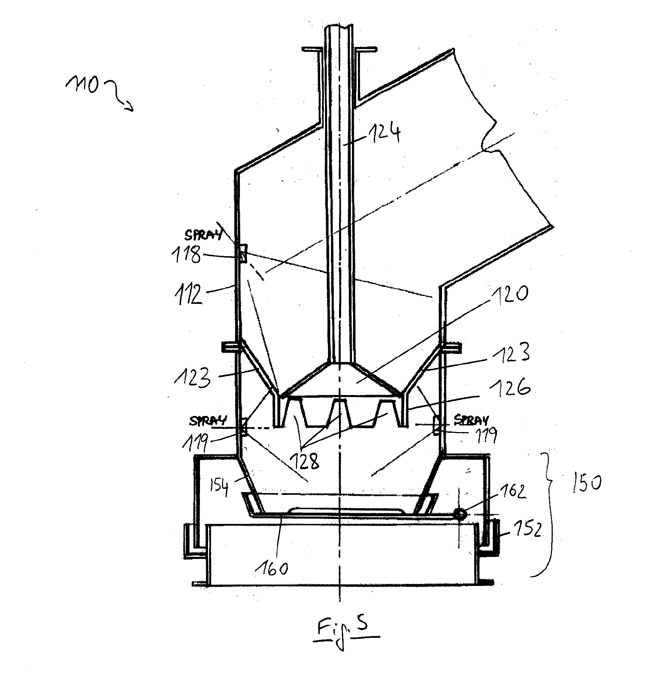

In Fig.3, obturating member 120 is in an open position and does not hinder the gas flow to the collecting main 116. As the obturating member 120 is moved upwards, the gap between obturating member 120 and the flow orifice 122 progressively diminishes. When the peripheral edge 130 of the obturating member 120 arrives at the height of the lower edge of sleeve 126, the flow of gas to the collecting main 116 is only possible through the throttling openings 128. Axially adjusting the obturating member 120 to offer a desired opening area to the gas flow permits a fine control of the gas flow rate to the collecting main 116, and thus of pressure inside the oven chamber (see Fig.4). As illustrated in Fig.5, the closed position of the flow control means is obtained when the peripheral edge 130 of the obturating member 120 is at the level of the flow orifice 122.

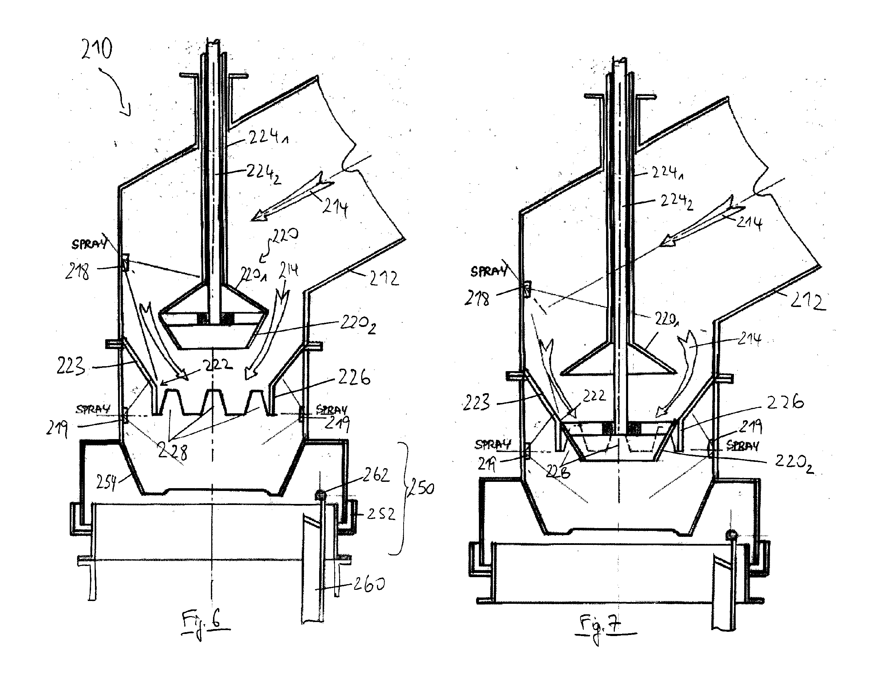

An improved execution, indicated 210, of the embodiment of Figs.3-5 is shown in Figs.6 to 9. The piping assembly is identical but the design of the obturating member 120 (and shaft 124) has been modified to permit an improved regulation at medium and low flow rates. As can be seen, the obturating member 220 now comprises upper and lower parts, respectively indicated 220₁ and 220₂, that can be moved relatively to each other in the axial direction. The uppert part 220₁ has essentially the same shape as the obturating member 120 in Fig.B1, and is moved axially by means of shaft 224₁. The lower part 220₂ is a cone segment (i.e. open at both ends) that tapers in direction of the flow orifice 222 and that is axially moveable by means of shaft 224₂, coaxially arranged inside shaft 224₁. Lower part 220₂ may be fixed to shaft 224₂ by means of spokes.

In the open position of the obturating member shown in Fig.6, the upper and lower parts 220₁ and 220₂ are joined: their respective peripheral edges, which have same diameter, are in abutment. This opening position is that adopted for high flow rates.

As the amounts of gases from the oven decrease, the lower part 220₂ is moved downward and defines, with its lateral tapering surface, in cooperation with the flow orifice 222, an annular flow section, the area of which depends on the axial position of the lower part 220₂.

Fig.7 shows a medium flow position, wherein the lower part 220₂ of obturating member 220 has been lowered so that its upper edge is in the plane of flow orifice 222, whereby lower part 220₂ forms a continuation of pipe section 223 in the axial direction and defines with its lower extremity, a reduced flow orifice.

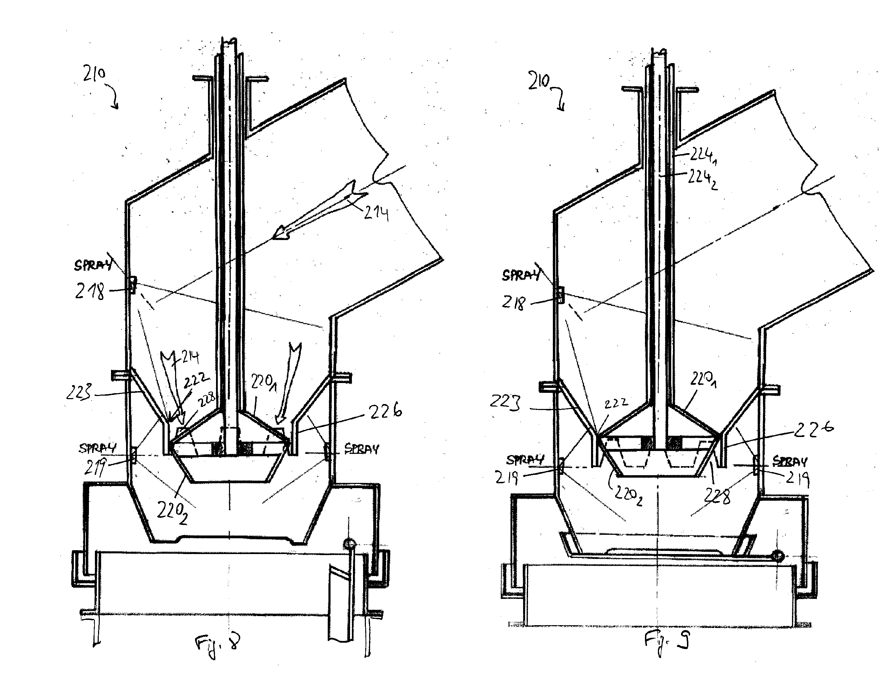

To throttle even lower gas flow rates, the two parts 220₁ and 220₂ are brought together again and moved simultaneously, see Fig. 8, to define a desired opening area of the throttling openings 228 by means of the obturating member upper part 220₁, as already explained with regard to Figs.3-5.

The closed position is that illustrated in Fig.9 where the peripheral edge of upper part 220₁ is at the level of the flow orifice 222, the lower part 220₂ being preferably in abutment with the upper part 220₁.

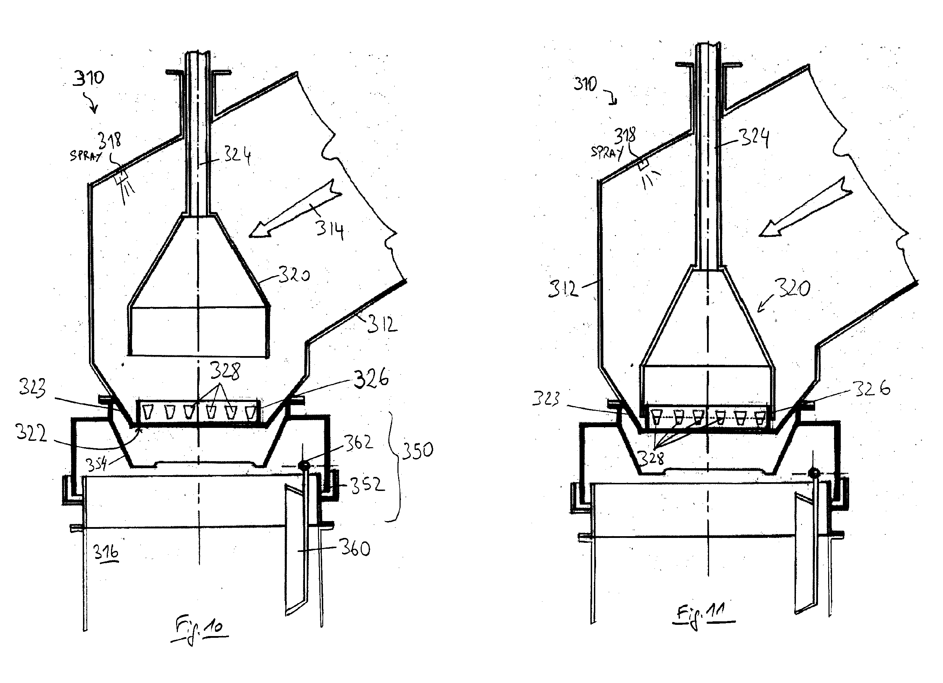

Turning now to Figs.10 and 11, there is shown a further alternative embodiment 310. The flow orifice 322 is defined by the extremity of tubular pipe section 323 arranged at the exit of the gooseneck 312. The flow control means here comprise an axially extending sleeve 326 surrounding the flow orifice 322 and fixedly mounted to pipe section 323. The throttling openings 328 are formed by a set of holes in the sleeve 326. The obturating member 320 takes the form of a bell or inversed pot that is axially guided by means of driving shaft 324. The inner diameter of the side walls of obturating member 320 is slightly greater than the outer diameter of sleeve 326 so that the obturating member 320 can be moved axially along sleeve 316 and thus obstruct a desired proportion of the throttling openings 328.

In the opening position, the obturating member 320 is located remote from the flow orifice 322 to allow large quantities of gas to be evacuated to the collecting main 316. To finely throttle the gas flow to the collecting main 316, the obturating member 320 is lowered until its lower peripheral edge overlaps the top egde of sleeve 326. From that axial position, the only route for the gas is through the throttling openings 328, the opening area of which can be adjusted by modifying the axial position of the obturating member 320 (see Fig.11 where obturating member 20 is at midway between top and bottom of throttling openings 328).

When the obturating member 320 is lowered so that its peripheral edge passes beyond the bottom of the throttling openings 328, the flow control means are in the closed position.

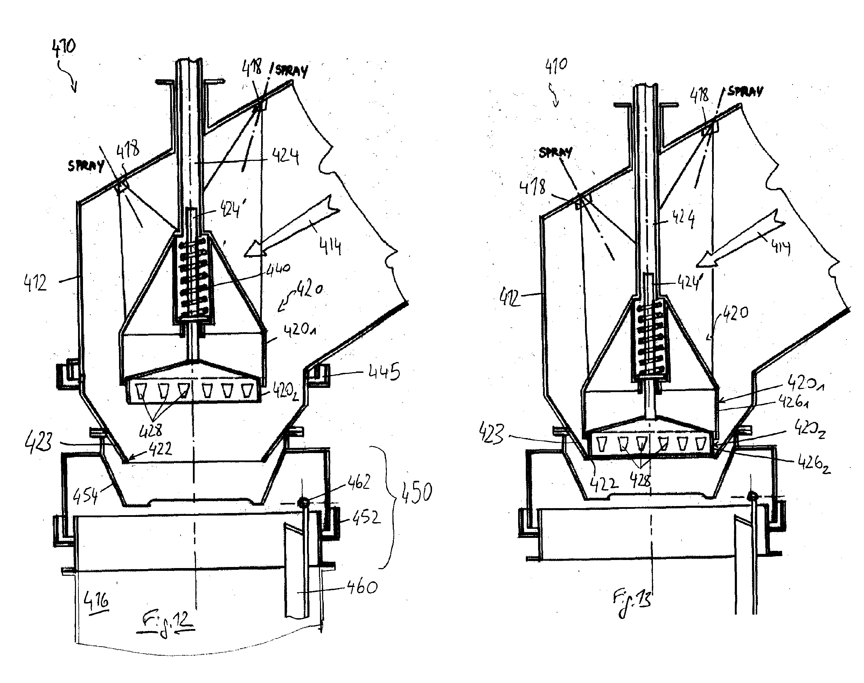

A last embodiment of a piping system 410 is shown in Figs.12 to 14. Reference sign 412 indicates a gooseneck for conveying the raw coke oven gases (arrow 414) from the upper part of the standpipe (not shown) to the collecting main 416 of the coke plant. Quenching of the gases is preferably carried out by means of spraying nozzle 418.

The flow control means include a flow orifice 422 defined by a tubular section 423 (here a conical segment) downstream of the gooseneck 412 and an associated obturating member 420 that is axially moveable by means of a shaft 424. In this embodiment the obturating member 420 comprises an obturating part 420₁ and a throttling part 420₂ with the set of throttling openings 428 therein. As can be seen, the obturating part 420₁ has a bell shape (may also be an inversed pot or cup shape) and is fixedly mounted to driving shaft 424.

The throttling part 420₂ may be a pot or sleeve member that is moveably mounted with respect to part 420₁, so that the lateral walls 426₁ of obturating member 420₁ may slide along the throttling openings 428 in the lateral wall 426₂ of part 420₂ to control their opening area. For that purpose, throttling part 420₂ has a shaft portion 424' coaxial with shaft 424 and axially moveable therein so that it can protrude out of the obturating part 420₁ in order to expose the whole opening area of the throttling openings 428 and that it can fit in the obturating part 420₁ to completely obturate the throttling openings 428. Preferably, throttling part 420₂ is biased downwardly, outside obturating part 420₁, by means of a spring 440.

It remains to be noted that the cooperating walls 426₁ and 426₂ of obturating and throttling parts 420₁, 420₂ have a diameter that is larger than that of flow orifice 422. It is thus possible to sit the two parts 420₁ and 420₂ against pipe section 423, as will be explained below.

Fig.12 illustrates the open position of obturating member 420; it is positioned at a certain distance from the flow orifice 422. In Fig.13 the obturating member 420 is in a throttling position; the obturating member 420 has been lowered so that the edge of throttling part 420₂ rests on a seat around the flow orifice 422, without the upper part 420₁ covering (overlapping) the throttling openings 428. In this configuration, the whole area of the throttling openings 428 is exposed to allow the flow of quenched gases therethrough. It is possible to finely control the flow of gases to the collecting main 416 by adjusting the height-by actuating shaft 424-of the obturating part 420₁ with respect to the throttling part 420₂ to cover a selected portion of the throttling openings 428.

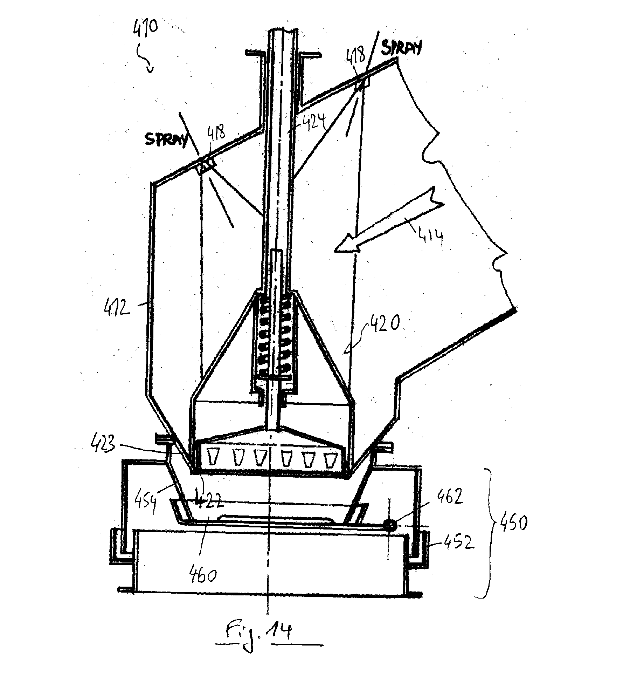

In Fig.14 the obturating part 420₁ has been lowered beyond the openings 428 and rests on the tubular section 423: it is in the closed position.

In the above embodiments, the piping elements, flow orifice and obturating member may generally be circular in cross-section, for simplicity of design and ease of construction. However these elements could also have other cylindrical shapes.

To make sense, the sum of the opening areas (when not obstructed) of the throttling openings should be lower than the opening area defined by the flow orifice. The shape of the throttling orifice can be designed at will to provide desired flow characteristics. In the above examples the flow openings have a trapezoidal shape, tapering in the closing direction.

In some of the embodiments, additional spray means 19, 119, 219 are provided at the height of the flow orifice, essentially for cleaning purposes.

It shall also be noted that the flow means are advantageously designed so that a hydraulic seal may form in the closed position. In the embodiments of Figs.1 to 9, process fluid may accumulate in the V channel formed by pipe section 24, 123 or 223 and the upper conical surface of the obturating member 20, 120, 220 (in closed position).

In the embodiments of Figs.10 to 14, a hydraulic seal may form by accumulation of process fluid in the recess defined by the lateral wall of obturating member 320, 420 (in closed position) and pipe section 323, 423.

In all of the above embodiments, a pot valve 60, 160, 260, 360, 460 has been provided downstream of the gooseneck (inside a connection section 50, 150... with expansion joint 52, 152...) and of the flow orifice 20, 120, 220, 320, 420 in order to warrant a sealed closure of the gas flow to the collecting main. As is known in the art, the pot valve is rotatable about a lateral axis 62, 162... and cooperates with the extremity of a truncated conical pipe 54, 154... to form a hydraulic seal (due to process fluid from the spray nozzles accumulating therein) in the horizontal, closed position (see e.g. Fig.14).

It shall be noted that such pot valve 60 is only optional. In particular it is considered that the hydraulic seal that forms between the lateral wall of the obturating member 320, 420 and pipe section 323, 423, in the embodiments of Figs. 10 to 14, is sufficient.

Having respect more particularly to the embodiment of Fig.12, reference sign indicates overflow means 445 arranged upstream of the flow orifice 422, so that process fluid that may collect in pipe section 423 in the closed position (Fig.14) of obturating member 420 may no exceed the level of the overflow means 445.

Finally, although not being shown in the drawings, manually and/or automatically operable drive means will typically be provided for actuating the obturating members via their respective shafts.

## Claims

1. Coke oven piping system comprising:
a pipe assembly for conveying coke oven gases from a coke oven to a collecting main;
flow control means comprising a flow orifice in said pipe assembly with an associated obturating member, said obturating member being axially moveable between an open position at a certain distance from said flow orifice to a closed position in which it substantially obstructs said flow orifice;
**characterized by** at least one throttling opening which is arranged so as to offer, towards the end of the closing stroke of said obturating member, an opening area for the gases to said collecting main that depends on the axial position of said obturating member.

2. System according to claim 1, wherein said at least one throttling opening is provided in said obturating member.

3. System according to claim 1, wherein said obturating member has a general bell, pot or dome shape and wherein a set of throttling openings is formed by a plurality of cut-outs extending from the bell or pot edge towards its closed end.

4. System according to claim 3, wherein said obturating member has a general, inversed pot shape or bell shape with said set of throttling openings therein.

5. System according to claim 1, wherein said at least one throttling opening is provided in a throttling sleeve extending axially from said flow orifice.

6. System according to claim 5, wherein said flow control means comprise a throttling sleeve surrounding said flow orifice; and said obturating member has a general bell, pot or cap shape that is designed so as to move, towards the end of the closing stroke of the obturating member, along the outer surface of said throttling sleeve to progressively obstruct the throttling openings in said throttling sleeve.

7. System according to claim 5, wherein said obturating member comprises:
an axially moveable upper part adapted to adjust the opening area of the throttling openings in said throttling sleeve and/or close the flow orifice, and
a lower part, axially moveable with respect to the upper part and/or in conjunction therewith and formed as a conical segment, whereby the lower part can be positioned with respect to the flow orifice to restrict the flow therethrough.

8. System according to claim 1, wherein
said obturating member comprises a generally bell, pot or dome shaped upper part and a lower part with one or more throttling openings therein, said lower part being axially moveable relative to said upper part so that upper and lower parts may overlap; and
said upper and lower parts cooperate with respective seats around said flow orifice.

9. System according to according to any one of the preceding claims, comprising manually and/or automatically operable drive means for actuating said obturating member through a respective shaft.

10. System according to according to any one of the preceding claims, comprising a pot valve downstream of said flow orifice.

11. A coke plant comprising a battery of coke ovens and a collecting main, wherein the gases from each single oven are lead to said collecting main via a coke oven offtake piping system according to any one of the preceding claims.
